# EUROPEAN PATENT SPECIFICATION

(11) **EP 4 389 305 B1**
(45) Date of publication and mention of the grant of the patent: **28.10.2026**
(21) Application number: 22216874.2
(22) Date of filing: 28.12.2022
(51) Int. Cl.: B05C 17/005, A61C 5/62, B65D 81/32

(54) **DISPENSING DEVICE WITH INDEPENDENT DUAL COMPARTMENT AND A DOUBLE CHANNEL TIP**
DOSIEREINRICHTUNG MIT UNABHÄNGIGER DOPPELKAMMER UND EINER DOPPELKANALIGEN SPITZE
DISPOSITIF DE DISTRIBUTION COMPORTANT DEUX COMPARTIMENTS INDEPENDANTS ET UNE POINTE A DOUBLE CANAL

(30) Priority: 21.12.2022 PT 2022118426
(43) Date of publication of application: 26.06.2024
(73) Proprietor: Egas Moniz - Cooperativa de Ensino Superior, CRL, 2829-511 Almada (PT); Sardinha Henriques Sales Delgado, Antonio Luis, 1400-319 Lisboa (PT)
(72) Inventor: Sardinha Henriques Sales Delgado, Antonio Luis, 1400-319 Lisboa (PT)
(74) Representative: Pereira da Cruz, Joao

(56) References cited:
- US-A- 4 260 077
- US-A- 4 431 414
- US-A1- 2004 011 816

## Description

### FIELD OF THE INVENTION

The present disclosure relates generally to the field of dispensers.

### BACKGROUND OF THE INVENTION

Dental composites are mixtures containing heterogenous phases: an organic phase of (meth)acrylate resin monomers dispersed in an inorganic phase comprising filler particles of glass, such as barium or other aluminosilicates, generally bound by an interphase of organosilanes coating said particles. Resin-based dental luting agents have similar composition, except a much lower filler load, or absence of fillers in some formulations. These materials used in restorative dentistry are typically stored in opaque dispensing syringes and from there they can be dispensed to a well or to an auxilliary instrument, or if they are less viscous, they may be directly used in the patient's mouth, when a tooth is being prepared during a restorative procedure.

Recently, formulations of these materials featuring self-adhesive properties have been marketed and commercialized. In the case of self-adhesive luting agents, or in some self-etching dental adhesives, these may contain two-parts that come in separate bottles. This includes a hydrophilic priming coat solution, designated primer, and a more hydrophobic resin mixture as a final coat, which co-polymerize together via light activation. Moreover, self-adhesive dental composites are also flowable resin-based mixtures which have been recently developed and are currently the subject of research focused on their optimization. These formulations are currently stored and dispensed as a one-part syringe system. However, to improve their bonding performance, they may be used with dental adhesives, which come as a separate bottle system, or other simple surface treatments, such as the use of acid, primer alone or novel deproteinizing solutions. Existing dispensing syringes and storage packages do not feature a single system combining two different components, whether they are self-adhesive luting agents or composites with one of the primary surface conditioning/priming steps above mentioned. Also, dental adhesives typically come in bottle systems that cannot be directly dispensed onto the cavity.

Thus, this justifies the need for such invention. Existing syringes do not support dispensing different, independent materials of two-part systems, sequentially, as selected by the operator. Current double-barrel syringes feature a common pushing piston that extrudes both materials at the same time. Furthermore, existing syringes do not contemplate a tip which can extrude two different materials, with different viscosities from independent channels, without mixing.

Patent US20200289237A1 discloses a cartridge and a piston for storing and dispensing a two-component dental material. The cartridge and the piston have a cross-section which substantially correspond to a D-shape in which the perimeter of the D-shape is defined by a plurality of circle segments only.

Patent EP2421464B1 discloses a dispensing device for a dental substance which has an outlet for the dental substance, and a valve for opening and closing the outlet. The device is switchable between a storage mode and an operative mode. In the storage mode a cannula is locked in the device and the valve opens the outlet, and in the storage mode the cannula can be released from the device and the valve closes the outlet. Patent US4431414A discloses a dental syringe for filling cavities, comprising: an elongated barrel with at least one shaft extending axially; a replaceable chamber attached to one end of the barrel, including at least one shaft; a nozzle extending from the chamber, with at least one shaft; and at least one plunger that moves axially through the shafts to transfer the dental filling material from the chamber through the nozzle.

As such, considering the foregoing, it may be appreciated that there is a need for novel and improved devices containing two independent chambers that may house different, immiscible mixtures, with a single tip that does not mix the components, allowing a sequential dispensing of two separate mixtures.

### SUMMARY OF THE INVENTION

In one aspect of the disclosure, there is provided a device for dispensing at least two different fluids, semi-solids, or a combination thereof according to Claim 1, the device comprises: at least one chamber comprising at least two separate compartments parallel to each other, preferably having different volumes, each compartment with an independent outlet; at least two independent plungers, configured to move independently, towards the independent outlet; a locking mechanism; and a tip comprising at least two channels, the channels preferably having different areas, wherein each of the channels is in fluid communication with a correspondent independent outlet, and the area of each channel corresponds to an area of an independent outlet.

The locking mechanism is configured to lock at least one plunger, when not being used, and optionally to lock at least one plunger from retrieving after being pressed.

In a further embodiment, the device comprises two compartments, wherein a volume of a first compartment is between 1.5 cm³ and 4 cm³, and a volume of a second compartment is between 6 cm³ and 10 cm³.

In a further embodiment, the device comprises two independent outlets, wherein a diameter of a first outlet is between 0.40 mm and 1.5 mm and a diameter of a second outlet is between 0.80 mm and 3 mm.

In a further embodiment, the tip comprises two independent channels, wherein a diameter of a first independent channel is between 0.40 mm and 1.5 mm and a diameter of a second independent channel is between 0.80 mm and 3 mm, and a total tip diameter is between 1.5 mm to 5 mm.

In a further embodiment, the device further comprises a seal, preferably a polymeric-based seal, a resin-based seal, or a combination thereof, positioned between the at least one chamber and the tip, wherein the seal comprises at least two hoops with different areas, and wherein the area of each hoop corresponds substantially to an area of an independent outlet.

In a further embodiment, the at least two independent plungers comprise slots along at least a portion of its length, positioned between 0.5 mm and 3 mm apart, and wherein a length of the slots can be adjusted to dispense an amount between 0.04 cm³ and 0.16 cm³ of the fluids, semi-solids, or a combination thereof.

In a further embodiment, the at least two independent plungers are configured to move a slot in the direction towards the independent outlet, when pressed.

In a further embodiment, the device comprises a button mechanism configured to select a compartment from which to dispense, wherein when selected, the compartment is aligned with a plunger.

In a further embodiment, the tip is metallic, polymeric-based, resin-based, or any combination thereof, and is curved, preferably at an angle between 160° and 110° with relation to the chamber.

In a further embodiment, the at least two different fluids, semi-solids, or a combination thereof, have different viscosities.

In a further embodiment, the device is a disposable device, preferably a syringe, a pen-like device, or a multifunctional pen-like device.

In another aspect of the disclosure, there is provided a system comprising a plurality of devices according to claim 1.

In another aspect of the disclosure, there is provided a use of the device according to claim 1, for dispensing at least two different fluids, semi-solids, or a combination thereof, without mixing the at least two different fluids, semi-solids, or a combination thereof.

In another aspect of the disclosure, there is provided a use of the device according to claim 1, in dentistry, veterinary medicine, pharmaceutical industry, cosmetic industry, construction industry, laboratory sciences, biomedical engineering, chemical engineering, mechanical engineering, or any combination thereof.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the scope of the disclosure will become apparent to those skilled in the art from this detailed description.

### BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.
Figure 1 is an exploded view simplified illustration of some of the components of a device (100) for dispensing at least two fluids, according to some embodiments of the present disclosure;
Figure 2 is a plan view simplified illustration of some of the components of a device (100) for dispensing at least two fluids, according to some embodiments of the present disclosure;
Figure 3 is a cross-section view simplified illustration of a chamber (20) and independent outlets (24, 26) of a device (100) for dispensing at least two fluids, according to some embodiments of the present disclosure;
Figure 4 is a cross-section view simplified illustration of a tip (7), according to some embodiments of the present disclosure;
Figure 5 is a plan view simplified illustration of a locking mechanism (4), according to some embodiments of the present disclosure;
Figure 6 is a plan view simplified illustration of a seal (5), according to some embodiments of the present disclosure;
Figure 7 is a cross-section view simplified illustration of a plunger (2,3), according to some embodiments of the present disclosure;
Figure 8 is an exploded view simplified illustration of some of the components of a device (200) for dispensing at least two fluids, according to some embodiments of the present disclosure;

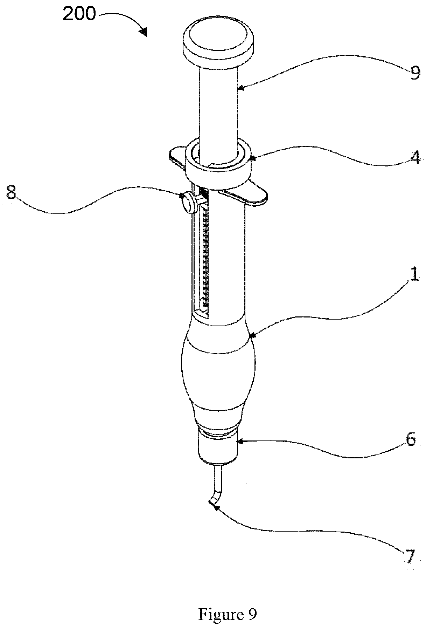

Figure 9 is a is a plan view simplified illustration of some of the components of a device (200) for dispensing at least two fluids, according to some embodiments of the present disclosure;

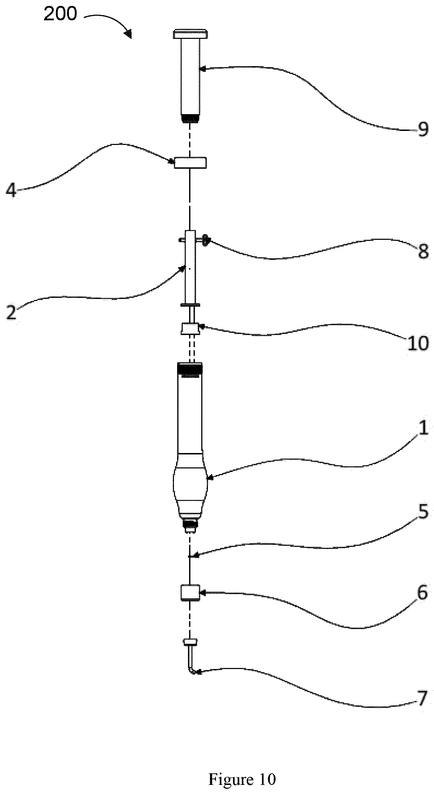

Figure 10 is a side view simplified illustration of a device (200), according to some embodiments of the present disclosure; and

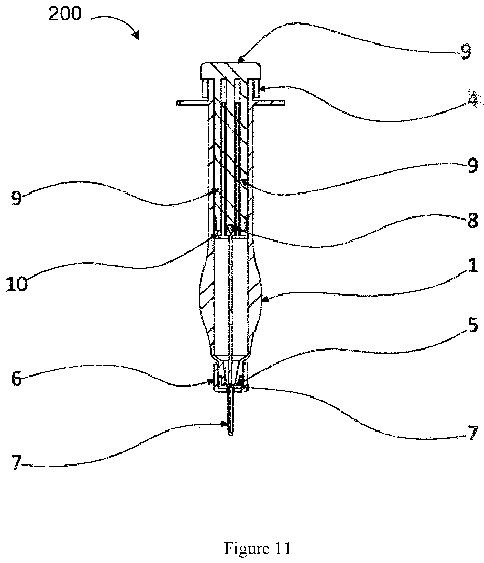

Figure 11 is a is a cross-section view simplified illustration of a device (200), according to some embodiments of the present disclosure.

### DETAILED DESCRIPTION OF THE INVENTION

According to some embodiments, the present disclosure provides a device for dispensing at least two different fluids, semi-solids, or a combination thereof.

As used herein, the term "semi-solid" also encompasses the term "semi-liquid" and refers to any material which is highly viscous, having a thick consistency between a solid and a liquid. According to the present disclosure the term "fluid" refers to a material (such as liquid) that can flow, has no fixed shape, and offers little resistance to an external stress. Non-limiting examples of fluid and semi-solid materials according to the present disclosure include a dental luting agent, a dental adhesive system (comprising a hydrophilic primer mixture and/or a hydrophobic bonding resin), a dental resin composite with varying viscosity, polymeric flowable mixture (e.g., cyanoacrylate glue), a dental irrigant solution, an enzymatic solution, a solvent, an acid for topical use, a microemulsion, topical cream, and any combination thereof.

In some embodiments, the device comprises at least one chamber comprising at least two separate compartments parallel to each other and each compartment with an independent outlet. In some embodiments, the device comprises a tip comprising at least two channels, wherein each of the channels is in fluid communication with a correspondent independent outlet. The present disclosure is based, in part, on the finding that a device as described herein may house different, immiscible mixtures, and allows sequential dispensing of the two separate mixtures. In some embodiments, the at least two different fluids, semi-solids, or a combination thereof, have different viscosities.

According to some embodiments, the present disclosure provides a device (100, 200) for dispensing at least two different fluids, semi-solids, or a combination thereof. In some embodiments, the device is a disposable device. In some embodiments, the device is a syringe, a pen-like device, or a multifunctional pen-like device.

The present disclosure is based, in part, on the finding that a tip as described herein comprises at least two channels with different sizes and openings, allowing to accommodate fluids, semi-solids, or a combination thereof, with different viscosities, and also allowing only one mixture to be dispensed at a time.

According to some embodiments, the device comprises at least two independent plungers, configured to move independently, and in only a direction towards the independent outlet. In some embodiments, the device comprises a locking mechanism. The present disclosure is based, in part, on the finding that a device as described herein allows for dispensing only one of the compartments while the other one is locked. In some embodiments, a user of the device chooses at which compartment to dispense from.

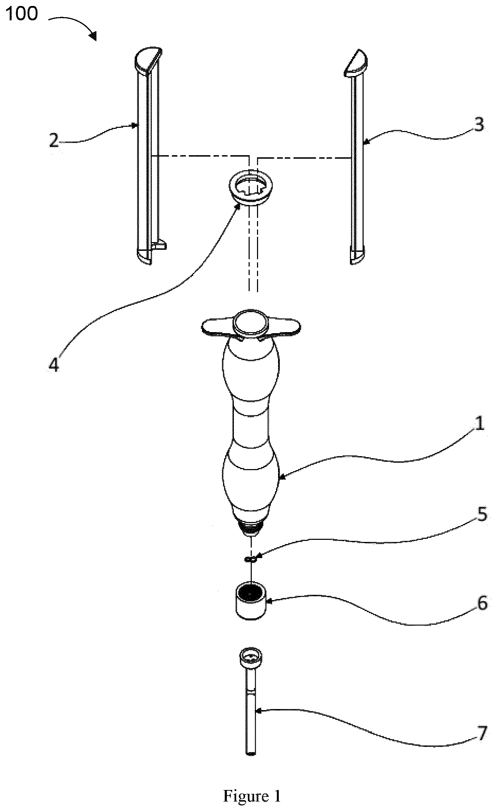

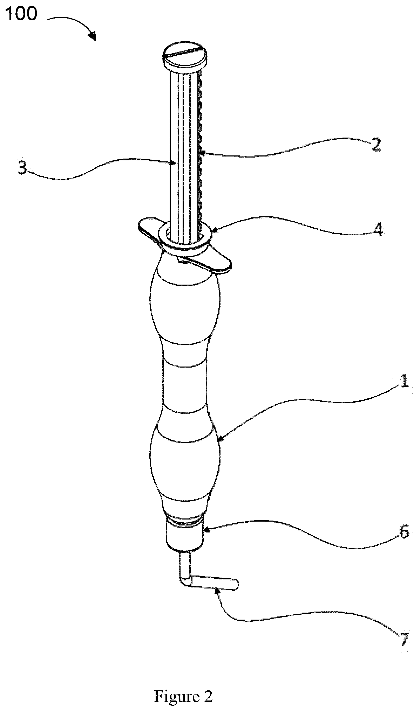

Reference is made to Figure 1 and Figure 2 which are an exploded view and a plan view simplified illustration of some of the components of a device (100) for dispensing at least two fluids, according to some embodiments of the present disclosure.

According to some embodiments, a device (100) according to the present disclosure comprises at least one chamber (1) comprising at least two separate compartments parallel to each other and each compartment with an independent outlet. The device comprises at least two independent plungers (2, 3), configured to move independently, and in only a direction towards the independent outlet. The device comprises a locking mechanism (4) and a tip (7) comprising at least two channels, wherein each of the channels is in fluid communication with a correspondent independent outlet.

In some embodiments, the device (100) comprises a seal (5) positioned between the at least one chamber and the tip. In some embodiments, the seal (5) is a polymeric-based seal, a resin-based seal, or a combination thereof. In some embodiments, the seal comprises at least two hoops with different areas, wherein the area of each hoop corresponds substantially to an area of an independent outlet. According to the present disclosure, a seal as described herein prevents the liquid of a material (fluids, semi-solids, or a combination thereof) from the compartments to outside of the chamber.

In some embodiments, the device (100) comprises a screw mechanism (6) configured to connect the at least one chamber (1) and the tip (7). In some embodiments, the tip (7) connects directly to the at least one chamber (1). Means to connect a chamber and a tip are well known in the art and will become apparent to a person skillet in the art. Non-limiting examples of means to connect a chamber (1) and a tip (7) include screw-type connection, click-type connection, complementary joint connections.

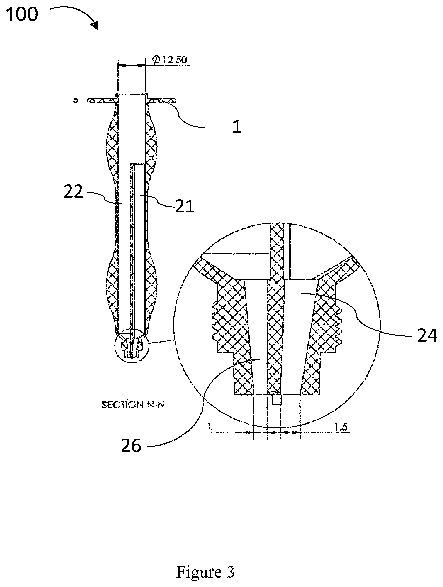

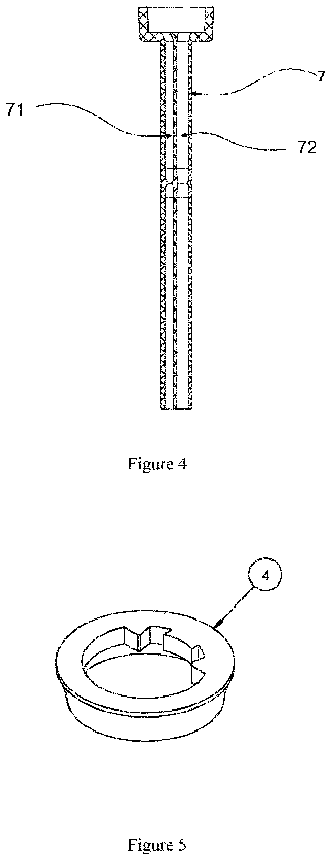

Reference is now made to Figure 3 which represents a cross-section view simplified illustration of a chamber (20) and independent outlets (24, 26) of a device (100), and Figure 4 which represents a cross-section view simplified illustration of a tip (7), according to some embodiments of the present disclosure.

According to some embodiments, a at least one chamber (1) comprises at least two separate compartments (21, 22). In some embodiments, the at least two separate compartments have different volumes.

According to some embodiments, a at least one chamber (1) comprises two separate compartments (21, 22), wherein a volume of a first compartment (21 or 22) is between 1.5 cm³ and 4 cm³, and a volume of a second compartment (22 if the first compartment is 21 or 21 if the first compartment is 22) is between 6 cm³ and 10 cm³.

In some embodiments, a volume of a first compartment is between 1.5 cm³ and 4 cm³, between 1.8 cm³ and 4 cm³, between 2 cm³ and 4 cm³, between 2.5 cm³ and 4 cm³, between 3 cm³ and 4 cm³, between 1.5 cm³ and 3 cm³, between 1.8 cm³ and 3 cm³, between 2 cm³ and 3 cm³, between 2.5 cm³ and 3 cm³, between 1.5 cm³ and 2 cm³, or between 1.8 cm³ and 2 cm³, including any range therebetween. Each possibility represents a separate embodiment of the present disclosure.

In some embodiments, a volume of a second compartment is between 6 cm³ and 10 cm³, between 6.5 cm³ and 10 cm³, between 7 cm³ and 10 cm³, between 8 cm³ and 10 cm³, between 8.5 cm³ and 10 cm³, between 9 cm³ and 10 cm³, between 6 cm³ and 9.5 cm³, between 6.5 cm³ and 9.5 cm³, between 7 cm³ and 9.5 cm³, between 8 cm³ and 9.5 cm³, or between 8.5 cm³ and 9.5 cm³, including any range therebetween. Each possibility represents a separate embodiment of the present disclosure.

The present disclosure is based, in part, on the finding that a volume of each of the at least two compartments is determined according to the chosen fluids, semi-solids, or a combination thereof and according to their viscosity and density, allowing for an accurate and waste-minimizing dispensing of the desired amount of each fluid, semi-solid, or a combination thereof.

As represented in Figure 3, each of the at least two compartments (21, 22) comprise a corresponding independent outlet (24, 26). In some embodiments, each independent outlet (24, 26) has a different diameter.

In some embodiments, a device (100) comprises two independent outlets (24, 26), wherein a diameter of a first outlet (24 or 26) is between 0.40 mm and 1.5 mm and a diameter of a second outlet (26 if the first outlet is 24 or 24 if the first outlet is 26) is between 0.80 mm and 3 mm.

In some embodiments, a diameter of a first outlet is between 0.40 mm and 1.5 mm, between 0.45 mm and 1.5 mm, between 0.5 mm and 1.5 mm, between 0.7 mm and 1.5 mm, between 0.9 mm and 1.5 mm, between 0.40 mm and 1 mm, between 0.45 mm and 1 mm, between 0.5 mm and 1 mm, between 0.7 mm and 1 mm, or between 0.9 mm and 1 mm, including any range therebetween. Each possibility represents a separate embodiment of the present disclosure.

In some embodiments, a diameter of a second outlet is between 0.80 mm and 3 mm, between 0.90 mm and 3 mm, between 1 mm and 3 mm, between 1.5 mm and 3 mm, between 2 mm and 3 mm, between 0.80 mm and 2.5 mm, between 0.90 mm and 2.5 mm, between 1 mm and 2.5 mm, between 1.5 mm and 2.5 mm, between 2 mm and 2.5 mm, between 0.80 mm and 2 mm, between 0.90 mm and 2 mm, between 1 mm and 2 mm, or between 1.5 mm and 2 mm, including any range therebetween. Each possibility represents a separate embodiment of the present disclosure.

In some embodiments, the at least two independent outlets are tapered towards their exit. The present disclosure is based in part, on the finding that the taper allows better control of material flow (fluid, semi-solid, or a combination thereof), and less quantity is wasted with each pressing of the device since there is resistance in the outflow due to convergence in the exit.

As represented in Figure 4, a tip (7) comprises two different channels (71, 72). In some embodiments, the at least two channels (71, 72) have different areas, wherein the area of each channel (71, 72) corresponds to an area of an independent outlet (24, 26).

In some embodiments, the tip (7) comprises two independent channels (71,72) wherein a diameter of a first independent channel (71 or 72) is between 0.40 mm and 1.5 mm and a diameter of a second independent channel (72 if the first channel is 71 or 71 if the first channel is 72) is between 0.80 mm and 3 mm.

In some embodiments, a diameter of a first channel is between 0.40 mm and 1.5 mm, between 0.45 mm and 1.5 mm, between 0.5 mm and 1.5 mm, between 0.7 mm and 1.5 mm, between 0.9 mm and 1.5 mm, between 0.40 mm and 1 mm, between 0.45 mm and 1 mm, between 0.5 mm and 1 mm, between 0.7 mm and 1 mm, or between 0.9 mm and 1 mm, including any range therebetween. Each possibility represents a separate embodiment of the present disclosure.

In some embodiments, a diameter of a second channel is between 0.80 mm and 3 mm, between 0.90 mm and 3 mm, between 1 mm and 3 mm, between 1.5 mm and 3 mm, between 2 mm and 3 mm, between 0.80 mm and 2.5 mm, between 0.90 mm and 2.5 mm, between 1 mm and 2.5 mm, between 1.5 mm and 2.5 mm, between 2 mm and 2.5 mm, between 0.80 mm and 2 mm, between 0.90 mm and 2 mm, between 1 mm and 2 mm, or between 1.5 mm and 2 mm, including any range therebetween. Each possibility represents a separate embodiment of the present disclosure.

In some embodiments, a total tip diameter is between 1.5 mm to 5 mm, between 1.9 mm to 5 mm, between 2 mm to 5 mm, between 2.5 mm to 5 mm, between 3 mm to 5 mm, between 4 mm to 5 mm, between 1.5 mm to 4.5 mm, between 1.9 mm to 4.5 mm, between 2 mm to 4.5 mm, between 2.5 mm to 4.5 mm, between 3 mm to 4.5 mm, between 1.5 mm to 4 mm, between 1.9 mm to 4 mm, between 2 mm to 4 mm, between 2.5 mm to 4 mm, or between 3 mm to 4 mm, including any range therebetween. Each possibility represents a separate embodiment of the present disclosure.

In some embodiments, the tip (7) is metallic, polymeric-based, resin-based, or any combination thereof. In some embodiments, the tip (7) is curved, preferably at an angle between 160° and 110° with relation to the chamber. In some embodiments, the tip (7) is curved and fixed at the described angle. In some embodiments, the tip is flexible and can move between an angle orientation as described, in only a plane (e.g., in the Y plane).

Reference is now made to Figure 5, which represents a locking mechanism (4) according to some embodiments of the present disclosure. In some embodiments, the locking mechanism (4) is a locking ring. In some embodiments, the locking mechanism is configured to lock at least one plunger, when not being used. The mechanism functions through macromechanical interlocking, where the locking mechanism engages the plunger not in use, latching its slots, thus preventing it from moving downwards.

In some embodiments, the locking mechanism is configured to lock at least one plunger from retrieving after being pressed. The mechanism functions through micromechanical interlocking, where the locking mechanism engages the plunger, latching its slots, thus preventing it from moving upwards.

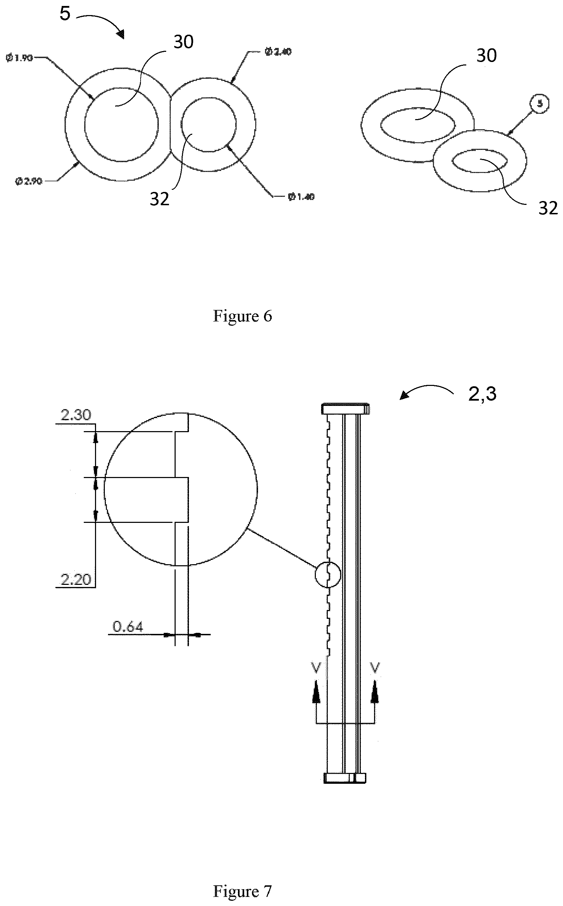

Reference is now made to Figure 6, which represents a seal (5) according to some embodiments of the present disclosure.

In some embodiments, the device (100) comprises a seal (5) positioned between the at least one chamber and the tip. In some embodiments, the seal (5) comprises at least two hoops (30, 32) with different areas, wherein the area of each hoop corresponds substantially to an area of an independent outlet.

In some embodiments, the seal (5) comprises two hoops (30, 32). In some embodiments, a diameter of a first hoop is between 0.40 mm and 1.5 mm, between 0.45 mm and 1.5 mm, between 0.5 mm and 1.5 mm, between 0.7 mm and 1.5 mm, between 0.9 mm and 1.5 mm, between 0.40 mm and 1 mm, between 0.45 mm and 1 mm, between 0.5 mm and 1 mm, between 0.7 mm and 1 mm, or between 0.9 mm and 1 mm, including any range therebetween. Each possibility represents a separate embodiment of the present disclosure. In some embodiments, a diameter of a second hoop is between 0.80 mm and 3 mm, between 0.90 mm and 3 mm, between 1 mm and 3 mm, between 1.5 mm and 3 mm, between 2 mm and 3 mm, between 0.80 mm and 2.5 mm, between 0.90 mm and 2.5 mm, between 1 mm and 2.5 mm, between 1.5 mm and 2.5 mm, between 2 mm and 2.5 mm, between 0.80 mm and 2 mm, between 0.90 mm and 2 mm, between 1 mm and 2 mm, or between 1.5 mm and 2 mm, including any range therebetween. Each possibility represents a separate embodiment of the present disclosure.

In some embodiments, the at least two hoops (30, 32) have a thickness between, 0.4 and 2 mm, between 0.5 mm and 2 mm, between 0.7 mm and 2 mm, between 0.9 mm and 2 mm, between 0.40 mm and 1.5 mm, between 0.45 mm and 1.5 mm, between 0.5 mm and 1.5 mm, between 0.7 mm and 1.5 mm, between 0.9 mm and 1.5 mm, between 0.40 mm and 1 mm, between 0.45 mm and 1 mm, between 0.5 mm and 1 mm, between 0.7 mm and 1 mm, or between 0.9 mm and 1 mm, including any range therebetween. Each possibility represents a separate embodiment of the present disclosure.

Reference is now made to Figure 7, which represents one of the at least two independent plungers (2, 3), according to some embodiments of the present disclosure.

In some embodiments, the at least two independent plungers (2, 3) comprise slots along at least a portion of its length, as represented in Figure 7, positioned between 0.5 mm and 3 mm apart, between 1 mm and 3 mm apart, between 1.5 mm and 3 mm apart, between 2 mm and 3 mm apart, between 0.5 mm and 2.9 mm apart, between 1 mm and 2.9 mm apart, between 1.5 mm and 2.9 mm apart, between 2 mm and 2.9 mm apart, between 0.5 mm and 2.5 mm apart, between 1 mm and 2.5 mm apart, between 1.5 mm and 2.5 mm apart, or between 2 mm and 2.5 mm apart, including any range therebetween. Each possibility represents a separate embodiment of the present disclosure.

In some embodiments, a length of the slots is adjusted to dispense an amount between 0.04 cm³ and 0.16 cm³ of the fluids, semi-solids, or a combination thereof.

In some embodiments, the at least two independent plungers (2, 3) are configured to move a slot in the direction towards the independent outlet, when pressed.

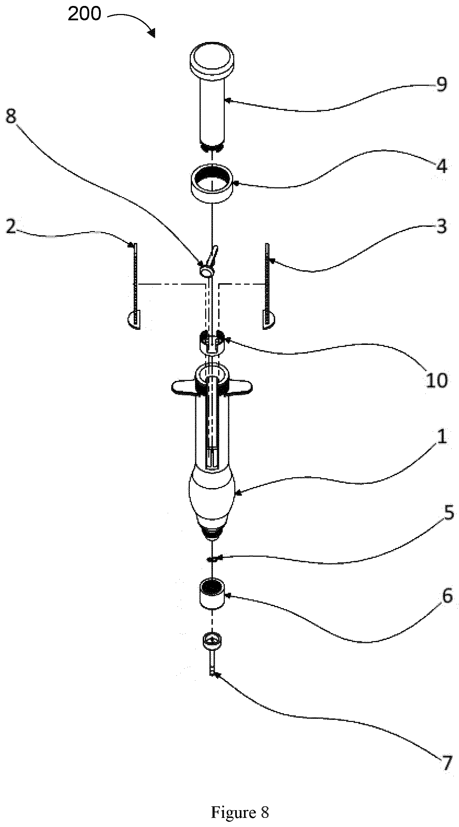

Reference is now made to Figure 8, which is an exploded view simplified illustration of some of the components of a device (200) for dispensing at least two fluids, according to some embodiments of the present disclosure.

According to some embodiments of the present disclosure, a device as described herein comprises a button mechanism, configured to select a compartment from which to dispense, wherein when selected, the compartment is aligned with a plunger. In some embodiments, a device (200) comprises a button mechanism, configured to select a compartment from which to dispense, wherein when selected, the compartment is aligned with a plunger.

In some embodiments, the button mechanism comprises a push rod and an engagement knob.

In some embodiments, a device (200) comprises a push rod (9) and an engagement knob (8), wherein the engagement knob (8) is in contact with the push rod (9) and is configured to select one of the at least two independent plungers (2, 3), allowing the push rod to actuate only in the independent plunger chosen, while the other plunger is locked. If plungers are at different dispensing positions (such as in cases where it is possible to empty one of the chambers first), it may be required to take the main push rod back, so the selector button can catch the opposite side.

In some embodiments, a device (200) further comprises an additional padlock (10) on push rod (9) that prevents the two independent plungers (2, 3) from coming out of the chamber (1). In some embodiments, the padlock (10) is in contact with the fluids, semi-solids, or a combination thereof, present in each compartment.

In some embodiments, the engagement knob (8), acts like a selector button allowing to select the plunger on the left or right, so that the push rod (9) acts like a main piston that descends and acts on it. The center of the engagement knob (8) is fixed to the push rod (9). In some embodiments, a mechanism as described herein works in "swipe"-like motion. In some embodiments, a user can swipe left or right.

According to some embodiments, the present disclosure, provides a system comprising a plurality of devices as described hereinabove.

According to some embodiments, the present disclosure, provides a use of a device as described hereinabove, for dispensing at least two different fluids, semi-solids, or a combination thereof, without mixing the at least two different fluids, semi-solids, or a combination thereof.

According to some embodiments, the present disclosure, provides a use of a device as described hereinabove, in dentistry, veterinary medicine, pharmaceutical industry, cosmetic industry, construction industry, laboratory sciences, biomedical engineering, chemical engineering, mechanical engineering, or any combination thereof.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

Although the disclosure has been described in conjunction with specific embodiments thereof, it is evident that many alternatives, modifications and variations within the scope of the claims will be apparent to those skilled in the art.

## Claims

1. Device (100, 200) for dispensing at least two different fluids, semi-solids, or a combination thereof, comprising:
at least one chamber (1) comprising at least two separate compartments (21, 22) parallel to each other, preferably having different volumes, each compartment (21, 22) with an independent outlet (24, 26);
at least two independent plungers (2, 3), configured to move independently towards said independent outlet (24, 26);
a locking mechanism (4); and
a tip (7) comprising at least two channels (71, 72), the channels (71, 72) preferably having different areas, wherein each of said channels (71, 72) is in fluid communication with a correspondent independent outlet (24, 26), and the area of each channel (71, 72) corresponds to an area of an independent outlet (24, 26);
wherein the device (100, 200) is **characterized by**:
the locking mechanism (4) being configured to lock at least one of the independent plungers (2, 3) when not in use.

2. Device (100, 200) according to claim 1, wherein said locking mechanism (4) is configured to lock at least one plunger (2, 3) from retrieving after being pressed.

3. Device (100, 200) according to claim 1 or 2, wherein the at least two separate compartments (21, 22) are a first (21 or 22) and a second (21 or 22) compartment, preferably wherein the volume of the first compartment (21 or 22) is from 1.5 cm³ to 4 cm³, and the volume of the second compartment (21 or 22) is from 6 cm³ to 10 cm³.

4. Device (100, 200) according to claim 3, wherein a diameter of a first outlet (24 or 26) is from 0.40 mm to 1.5 mm and a diameter of a second outlet (24 or 26) is from 0.80 mm to 3 mm.

5. Device (100, 200) according to any one of claims 3 to 4, wherein said tip comprises two independent channels (71, 72), wherein the diameter of a first independent channel (71) is from 0.40 mm to 1.5 mm and a diameter of a second independent channel (72) is from 0.80 mm to 3 mm, and a total tip (7) diameter is from 1.5 mm to 5 mm.

6. Device (100, 200) according to any one of claims 1 to 5, further comprising a seal (5), preferably a polymeric-based seal, a resin-based seal, or a combination thereof, positioned between said at least one chamber (1) and said tip (7), wherein said seal (5) comprises at least two hoops (30, 32) with different areas, and wherein the area of each hoop (30, 32) corresponds substantially to an area of an independent outlet (24, 26).

7. Device (100, 200) according to any one of claims 1 to 6, wherein said at least two independent plungers (2, 3) comprise slots along at least a portion of its length, positioned from 0.5 mm to 3 mm apart, and wherein a length of said slots are configured to dispense an amount from 0.04 cm³ to 0.16 cm³ of said fluids, semi-solids, or a combination thereof.

8. Device (100, 200) according to claim 7, wherein said at least two independent plungers (2, 3) are configured to move a slot in the direction towards said independent outlet (24, 26), when pressed.

9. Device (100, 200) according to any one of claims 1 to 8, comprising a button mechanism configured to select a compartment (21, 22) from which to dispense, wherein when selected, said compartment (21, 22) is aligned with a plunger (2, 3).

10. Device (100, 200) according to any one of claims 1 to 9, wherein said tip (7) is metallic, polymeric-based, resin-based, or any combination thereof, and is curved, preferably at an angle from 160° to 110° with relation to said chamber (1).

11. Device (100, 200) according to any one of claims 1 to 10, wherein said at least two different fluids, semi-solids, or a combination thereof, have different viscosities between them.

12. Device (100, 200) according to any one of claims 1 to 11, wherein said device (100, 200) is a disposable device, preferably a syringe, a pen-like device, or a multifunctional pen-like device.

13. System comprising a plurality of devices (100, 200) according to any one of claims 1 to 12.

14. Use of the device (100, 200) according to any one of claims 1 to 12, in dentistry, veterinary medicine, pharmaceutical industry, cosmetic industry, construction industry, laboratory sciences, biomedical engineering, chemical engineering, mechanical engineering, or any combination thereof, preferably for dispensing at least two different fluids, semi-solids, or a combination thereof, without mixing said at least two different fluids, semi-solids, or a combination thereof.

15. Use of the system according to claim 13, in dentistry, veterinary medicine, pharmaceutical industry, cosmetic industry, construction industry, laboratory sciences, biomedical engineering, chemical engineering, mechanical engineering, or any combination thereof, preferably for dispensing at least two different fluids, semi-solids, or a combination thereof, without mixing said at least two different fluids, semi-solids, or a combination thereof.

## Patentansprüche

1. Vorrichtung (100, 200) zum Abgeben von mindestens zwei verschiedenen
Flüssigkeiten, halbfesten Stoffen oder einer Kombination davon, umfassend:
mindestens eine Kammer (1) mit mindestens zwei zueinander parallele. getrennte Abschnitte (21, 22), die vorzugsweise unterschiedliche Volumina aufweisen, wobei jeder Abschnitt (21, 22) über einen unabhängigen Auslass (24, 26) verfügt;
mindestens zwei unabhängige Stößel (2, 3), die so ausgebildet sind, dass sie sich unabhängig voneinander in Richtung der unabhängigen Auslässe (24, 26) bewegen;
einen Verriegelungsmechanismus (4); und
eine Spitze (7) mit mindestens zwei Kanälen (71, 72), wobei die Kanäle (71, 72) vorzugsweise unterschiedliche Querschnittsflächen aufweisen, wobei jeder der Kanäle (71, 72) in Fluidverbindung mit einem entsprechenden unabhängigen Auslass (24, 26) steht, und der Querschnitt jedes Kanals (71, 72) einem Querschnitt eines unabhängigen Auslasses (24, 26) entspricht;
wobei die Vorrichtung (100, 200) **dadurch gekennzeichnet ist, dass**:
der Verriegelungsmechanismus (4) so ausgebildet ist, dass er mindestens einen der unabhängigen Stößel (2, 3) verriegelt, wenn dieser nicht in Gebrauch ist.

2. Vorrichtung (100, 200) nach Anspruch 1, wobei der Verriegelungsmechanismus (4) so ausgebildet ist, dass er mindestens einen Stößel (2, 3) nach dem Drücken gegen ein Zurückziehen verriegelt.

3. Vorrichtung (100, 200) nach Anspruch 1 oder 2, wobei die mindestens zwei getrennten Abschnitte (21, 22) ein erster (21 oder 22) und ein zweiter (21 oder 22) Abschnitt sind, wobei vorzugsweise das Volumen des ersten Abschnitt (21 oder 22) zwischen 1,5 cm³ und 4 cm³ liegt und das Volumen des zweiten Abschnitt (21 oder 22) zwischen 6 cm³ und 10 cm³ liegt.

4. Vorrichtung (100, 200) nach Anspruch 3, wobei der Durchmesser eines ersten Auslasses (24 oder 26) zwischen 0,40 mm und 1,5 mm und der Durchmesser eines zweiten Auslasses (24 oder 26) zwischen 0,80 mm und 3 mm liegt.

5. Vorrichtung (100, 200) nach einem der Ansprüche 3 bis 4, wobei die Spitze zwei unabhängige Kanäle (71, 72), wobei der Durchmesser eines ersten unabhängigen Kanals (71) zwischen 0,40 mm und 1,5 mm und der Durchmesser eines zweiten unabhängigen Kanals (72) zwischen 0,80 mm und 3 mm liegt und der Gesamtdurchmesser der Spitze (7) zwischen 1,5 mm und 5 mm liegt.

6. Vorrichtung (100, 200) gemäß einem der Ansprüche 1 bis 5, die ferner eine Dichtung (5) umfasst, vorzugsweise eine Dichtung auf Polymerbasis, eine Dichtung auf Harzbasis oder eine Kombination davon, die zwischen der mindestens einen Kammer (1) und der Spitze (7) angeordnet ist, wobei die Dichtung (5) mindestens zwei Ringe (30, 32) mit unterschiedlichen Flächen umfasst und wobei die Fläche jedes Rings (30, 32) im Wesentlichen einer Fläche eines unabhängigen Auslasses (24, 26) entspricht.

7. Vorrichtung (100, 200) nach einem der Ansprüche 1 bis 6, wobei die mindestens zwei unabhängigen Stößel (2, 3) entlang mindestens eines Teils ihrer Länge Schlitze aufweisen, die in einem Abstand von 0,5 mm bis 3 mm voneinander angeordnet sind, und wobei eine Länge der Schlitze so ausgelegt ist, dass eine Menge von 0,04 cm³ bis 0,16 cm³ der Flüssigkeiten, halbfesten Stoffe oder einer Kombination davon abzugeben.

8. Vorrichtung (100, 200) nach Anspruch 7, wobei die mindestens zwei unabhängigen Stößel (2, 3) so ausgebildet sind, dass sie beim Drücken einen Schlitz in Richtung des unabhängigen Auslasses (24, 26) bewegen.

9. Vorrichtung (100, 200) nach einem der Ansprüche 1 bis 8, umfassend einen Knopfmechanismus, der so ausgelegt ist, dass er einen Abschnitt (21, 22) auswählt, aus dem abgegeben werden soll, wobei der ausgewählte Abschnitt (21, 22) bei Auswahl mit einem Stößel (2, 3) fluchtet

10. Vorrichtung (100, 200) nach einem der Ansprüche 1 bis 9, wobei die Spitze (7) aus Metall, auf Polymerbasis, auf Harzbasis oder einer beliebigen Kombination davon besteht und gekrümmt ist, vorzugsweise in einem Winkel von 160° bis 110° in Bezug auf die Kammer (1).

11. Vorrichtung (100, 200) gemäß einem der Ansprüche 1 bis 10, wobei die mindestens zwei verschiedenen Flüssigkeiten, halbfesten Stoffe oder eine Kombination davon untereinander unterschiedliche Viskositäten aufweisen.

12. Vorrichtung (100, 200) nach einem der Ansprüche 1 bis 11, wobei die Vorrichtung (100, 200) eine Einwegvorrichtung ist, vorzugsweise eine Spritze, eine stiftartige Vorrichtung oder eine multifunktionale stiftartige Vorrichtung.

13. System, das eine Vielzahl von Vorrichtungen (100, 200) gemäß einem der Ansprüche 1 bis 12 umfasst.

14. Verwendung der Vorrichtung (100, 200) gemäß einem der Ansprüche 1 bis 12 in der Zahnmedizin, Veterinärmedizin, pharmazeutischen Industrie, Kosmetikindustrie, Bauindustrie, Laborwissenschaften, Biomedizintechnik, Chemieingenieurwesen, Maschinenbaus oder einer beliebigen Kombination davon, vorzugsweise zum Abgeben von mindestens zwei verschiedenen Flüssigkeiten, halbfesten Stoffen oder einer Kombination davon, ohne dass diese mindestens zwei verschiedenen Flüssigkeiten, halbfesten Stoffe oder eine Kombination davon vermischt werden.

15. Verwendung des Systems gemäß Anspruch 13 in der Zahnmedizin, Veterinärmedizin, pharmazeutischen Industrie, Kosmetikindustrie, Bauindustrie, Laborwissenschaften, Biomedizintechnik, Chemieingenieurwesen, Maschinenbau oder einer beliebigen Kombination davon, vorzugsweise zum Abgeben von mindestens zwei verschiedenen Flüssigkeiten, halbfesten Stoffen oder einer Kombination davon, ohne dass die mindestens zwei verschiedenen Flüssigkeiten, halbfesten Stoffe oder die Kombination davon vermischt werden .

## Revendications

1. Dispositif (100, 200) destiné à distribuer au moins deux fluides différents, deux semi-solides différents, ou une combinaison de ceux-ci, comprenant :
au moins une chambre (1) comprenant au moins deux compartiments séparés (21, 22) parallèles l'un à l'autre, de préférence présentant des volumes différents, chaque compartiment (21, 22) comportant une sortie indépendante (24, 26) ;
au moins deux pistons indépendants (2, 3), configurés pour se déplacer indépendamment en direction de ladite sortie indépendante (24, 26) ;
un mécanisme de blocage (4) ; et
une pointe (7) comprenant au moins deux canaux (71, 72), les canaux (71, 72) présentant de préférence des sections différentes, où chacun desdits canaux (71, 72) est en communication fluidique avec une sortie indépendante correspondante (24, 26), et la section de chaque canal (71, 72) correspond à une section d'une sortie indépendante (24, 26) ;
le dispositif (100, 200) étant **caractérisé en ce que** :
le mécanisme de blocage (4) est configuré pour bloquer au moins l'un des pistons indépendants (2, 3) lorsqu'il n'est pas utilisé.

2. Dispositif (100, 200) selon la revendication 1, dans lequel ledit mécanisme de blocage (4) est configuré pour empêcher au moins un piston (2, 3) de remonter après avoir été actionné.

3. Dispositif (100, 200) selon la revendication 1 ou 2, dans lequel les au moins deux compartiments séparés (21, 22) sont un premier compartiment (21 ou 22) et un deuxième compartiment (21 ou 22), de préférence dans lequel le volume du premier compartiment (21 ou 22) est compris entre 1,5 cm³ et 4 cm³, et le volume du deuxième compartiment (21 ou 22) est compris entre 6 cm³ et 10 cm³.

4. Dispositif (100, 200) selon la revendication 3, dans lequel le diamètre d'une première sortie (24 ou 26) est compris entre 0,40 mm et 1,5 mm et le diamètre d'une deuxième sortie (24 ou 26) est compris entre 0,80 mm et 3 mm.

5. Dispositif (100, 200) selon l'une quelconque des revendications 3 à 4, dans lequel ladite pointe comprend deux canaux indépendants (71, 72), dans lequel le diamètre d'un premier canal indépendant (71) est compris entre 0,40 mm et 1,5 mm et le diamètre d'un deuxième canal indépendant (72) est compris entre 0,80 mm et 3 mm, et le diamètre total de la pointe (7) est compris entre 1,5 mm et 5 mm.

6. Dispositif (100, 200) selon l'une quelconque des revendications 1 à 5, comprenant en outre un joint d'étanchéité (5), de préférence un joint d'étanchéité à base de polymère, un joint d'étanchéité à base de résine, ou une combinaison de ceux-ci, positionné entre ladite au moins une chambre (1) et ladite pointe (7), dans lequel ledit joint d'étanchéité (5) comprend au moins deux anneaux (30, 32) présentant des sections différentes, et dans lequel la section de chaque anneau (30, 32) correspond sensiblement à la section d'une sortie indépendante (24, 26).

7. Dispositif (100, 200) selon l'une quelconque des revendications 1 à 6, dans lequel lesdits au moins deux pistons indépendants (2, 3) comprennent des rainures sur au moins une partie de leur longueur, espacées de 0,5 mm à 3 mm, et dans lequel la longueur desdites rainures est configurée pour distribuer une quantité comprise entre 0,04 cm³ et 0,16 cm³ desdits fluides, semi-solides, ou d'une combinaison de ceux-ci.

8. Dispositif (100, 200) selon la revendication 7, dans lequel lesdits au moins deux pistons indépendants (2, 3) sont configurés pour déplacer une rainure en direction de ladite sortie indépendante (24, 26) lorsqu'ils sont actionnés.

9. Dispositif (100, 200) selon l'une quelconque des revendications 1 à 8, comprenant un mécanisme à bouton configuré pour sélectionner un compartiment (21, 22) à partir duquel effectuer la distribution, dans lequel, lorsqu'il est sélectionné, ledit compartiment (21, 22) est aligné avec un piston (2, 3).

10. Dispositif (100, 200) selon l'une quelconque des revendications 1 à 9, dans lequel ladite pointe (7) est métallique, à base de polymère, à base de résine, ou une combinaison de ceux-ci, et est courbée, de préférence selon un angle compris entre 160° et 110° par rapport à ladite chambre (1).

11. Dispositif (100, 200) selon l'une quelconque des revendications 1 à 10, dans lequel lesdits au moins deux fluides différents, deux semi-solides différents, ou une combinaison de ceux-ci, présentent des viscosités différentes.

12. Dispositif (100, 200) selon l'une quelconque des revendications 1 à 11, dans lequel ledit dispositif (100, 200) est un dispositif jetable, de préférence une seringue, un dispositif de type stylo, ou un dispositif de type stylo multifonctionnel.

13. Système comprenant une pluralité de dispositifs (100, 200) selon l'une quelconque des revendications 1 à 12.

14. Utilisation du dispositif (100, 200) selon l'une quelconque des revendications 1 à 12, en dentisterie, en médecine vétérinaire, dans l'industrie pharmaceutique, dans l'industrie cosmétique, dans l'industrie de la construction, dans les sciences de laboratoire, dans le génie biomédical, dans le génie chimique, dans le génie mécanique, ou dans toute combinaison de ceux-ci, de préférence pour distribuer au moins deux fluides différents, deux semi-solides différents, ou une combinaison de ceux-ci, sans mélanger lesdits au moins deux fluides différents, deux semi-solides différents, ou une combinaison de ceux-ci.

15. Utilisation du système selon la revendication 13, en dentisterie, en médecine vétérinaire, dans l'industrie pharmaceutique, dans l'industrie cosmétique, dans l'industrie de la construction, dans les sciences de laboratoire, dans le génie biomédical, dans le génie chimique, dans le génie mécanique, ou dans toute combinaison de ceux-ci, de préférence pour distribuer au moins deux fluides différents, deux semi-solides différents, ou une combinaison de ceux-ci, sans mélanger lesdits au moins deux fluides différents, deux semi-solides différents, ou une combinaison de ceux-ci.
